# EUROPÄISCHE PATENTANMELDUNG

(11) **EP 4 224 786 A1**
(43) Veröffentlichungstag der Anmeldung: **09.08.2023**
(21) Anmeldenummer: 23154708.4
(22) Anmeldetag: 02.02.2023
(51) Int. Cl.: H04L 9/32, G06F 21/31, G06F 21/64

(54) **VERFAHREN UND VORRICHTUNG ZUR ERSTELLUNG ELEKTRONISCHER SIGNATUREN**

(30) Priorität: 04.02.2022 AT 500652022
(71) Anmelder: PrimeSign GmbH, 8010 Graz (AT)
(72) Erfinder: Rössler, Thomas, 8047 Hart bei Graz (AT); Bonato, Martin, 8045 Graz (AT); Rath, Christof, 8010 Graz (AT)
(74) Vertreter: Puchberger & Partner Patentanwälte

(57) **Zusammenfassung**

Die Erfindung betrifft ein Verfahren zur Erstellung elektronischer Signaturen auf der Basis von bestehenden elektronischen Identifikationsmitteln (eIDs). Das zur elektronischen Signatur herangezogene Signaturzertifikat wird dabei anlassbezogen und nur für diese eine Signaturtransaktion im Zuge und zum Zeitpunkt der Signaturtransaktion neu ausgestellt und nur für diese eine Signaturtransaktion verwendet. Die Daten des im Zuge der Transaktion ausgestellten Signaturzertifikates, das sind die Identitätsdaten des Benutzers, werden von dem bestehenden elektronischen Identifikationsmittel des Benutzers direkt übernommen bzw. davon abgeleitet, sowie auch die Authentifikation des Benutzers, und damit die Auslösung (Autorisierung) der elektronischen Signatur, wird durch das bestehende elektronische Identifikationsmittel durchgeführt. Das Verfahren ist somit nahtlos und in einem Zug. Es umfasst die Identifikation und Authentifikation des Benutzers, die Ausstellung des transaktionsgebundenen Zertifikats, sowie die Autorisierung (Auslösung) und die darauffolgende Erstellung der elektronischen Signatur, wobei die Durchgängigkeit auf Basis des elektronischen Identifikationsmittels sichergestellt wird.

## Beschreibung

Die Erfindung betrifft ein Verfahren und eine Vorrichtung zur Erstellung elektronischer Signaturen.

Unter einer elektronischen Signatur versteht man Daten, die einem elektronischen Dokument beigefügt werden, um dessen Authentizität und die Unterzeichnung dieses Dokuments durch einen Benutzer, den Signator, zu bestätigen. Eine qualifizierte elektronische Signatur ist eine durch die eIDAS-Verordnung (EU) Nr. 910/2014 geregelte Form einer elektronischen Signatur, die im Rechtsverkehr die handschriftliche Unterschrift ersetzt, wenn dies durch eine Rechtsvorschrift vorgesehen ist oder zwischen Parteien vereinbart wurde. Qualifizierte elektronische Signaturen basieren auf qualifizierten elektronischen Zertifikaten, die ebenfalls in der eIDAS Verordnung geregelt sind. Diese Zertifikate und entsprechende Signaturdienste werden von qualifizierten Vertrauensdiensteanbietern (VDA) ausgegeben bzw. erbracht, die von staatlich bestimmten Stellen zertifiziert wurden.

Zur Erstellung einer elektronischen Signatur ist grundsätzlich ein Signaturzertifikat erforderlich. Ein Signaturzertifikat ist eine elektronische Bescheinigung, welche die Identitätsdaten des Benutzers mit seinem öffentlichen Schlüssel verbindet. Zur elektronischen Signierung werden die Identitätsdaten des Benutzers für die Ausstellung eines Signaturzertifikates geprüft, und ein eindeutiger Fingerabdruck des Dokuments (Hash-Wert des Dokuments) wird, unter Nutzung des privaten Schlüssels des Benutzers, verschlüsselt. Das verschlüsselte Ergebnis bildet den Signaturwert.

Der Empfänger kann den Signaturwert des elektronisch signierten Dokuments nur mit dem öffentlichen Schlüssel des Unterzeichners, der als Teil des Signaturzertifikates veröffentlicht wird, entschlüsseln. Gelingt diese Entschlüsselung und passt der entschlüsselte Fingerabdruck des Dokuments zum vorliegenden Dokument, so ist die Signatur positiv geprüft und die Identität des Unterzeichners über das Signaturzertifikat feststellbar.

Aus dem Stand der Technik wird für die Erstellung einer elektronischen Signatur in der Regel von einem zweistufigen Verfahren ausgegangen (vereinfachte Darstellung):
**Schritt 1:** Identifikation des Benutzers und Erstellung des Signaturzertifikats. Im ersten Schritt wird die Identität des Benutzers festgestellt und es wird ein Signaturzertifikat erstellt. In diesem Schritt werden auch die Identitätsdaten und die Authentifikationsmechanismen des Benutzers zum Schutz seines privaten Schlüssels festgelegt. Bei den Identitätsdaten handelt es sich zum Beispiel um den Vornamen, den Nachnamen oder das Geburtsdatum der Person, die über einen Ausweis belegt werden müssen. Bei den Authentifikationsmechanismen handelt es sich beispielsweise um die Prüfung eines Usernamens und eines Passworts sowie eines weiteren unabhängigen Faktors, wie etwa die Authentifikation über eine SMS oder ein kryptografisches Token. Das Signaturzertifikat enthält den öffentlichen Schlüssel des Benutzers sowie dessen geprüfte Identitätsdaten und hat meist eine begrenzte Gültigkeitsdauer, beispielsweise zwei Jahre. Das Signaturzertifikat und der dazugehörige private Schlüssel des Benutzers werden etwa auf Fernsignatursystemen bei Vertrauensdiensteanbietern (VDAs) oder Signaturkarten (Smartcards) abgelegt.
**Schritt 2**: Erstellung der elektronischen Signatur. Im zweiten Schritt wird mittels des privaten Schlüssels, des Signaturzertifikats und der zu signierenden Daten die elektronische Signatur erstellt. Der Benutzer muss sich dabei seiner persönlichen und in Schritt 1 festgelegten Authentifikationsmechanismen bedienen, um Zugriff auf seinen privaten Schlüssel und sein Signaturzertifikat zu erlangen. Zur Erstellung der elektronischen Signatur wird ein Hash-Wert des zu signierenden Dokuments erzeugt und der Hash-Wert unter Nutzung des privaten Schlüssels des Unterzeichners verschlüsselt.

Die Erstellung des Signaturzertifikats ist unabhängig von den zu signierenden Dokumenten. In der Regel können nach der Erstellung eines Signaturzertifikats und des privaten Schlüssels (Schritt 1) diese beliebig oft verwendet werden, um Dokumente/Daten elektronisch zu unterzeichnen.

Dieses Verfahren ist Stand der Technik, zum Beispiel bei Zertifikaten, die auf Basis von Smart Cards oder von sogenannten Fernsignatursystemen ausgestellt wurden.
Fernsignatursysteme sind Signaturservices, die die kryptografischen Signaturerstellungsdaten sicher erstellen (privater und öffentlicher Signaturschlüssel), verwahren und für den Benutzer zur Anwendung (Signaturerstellung) bringen.

Fernsignatursysteme werden in der Regel durch Vertrauensdiensteanbieter (Trust-Center) bereitgestellt und betrieben, die auch die Signaturzertifikate ausstellen und verwalten. Das Prinzip ist aber allgemein gültig, ungeachtet davon, ob es sich um eine einfache, fortgeschrittene oder qualifizierte Signatur gemäß eIDAS-Verordnung handelt. Dabei legen besonders qualifizierte Signaturen in allen Belangen die höchsten Ansprüche an das Verfahren, sowohl was die Identifizierung und Legitimierung der Benutzer in Schritt 1 betrifft, als auch die Qualität, den Schutz und damit die Stärke der Authentifikationsmechanismen zur sicheren Anwendung (Autorisierung) der Signaturerstellungsdaten.

Aus dem Stand der Technik sind Verfahren bekannt, bei denen die zwei Schritte zur Abbildung konkreter Workflows, zum Beispiel einem Online-Antrag zur Kontoeröffnung bei einer Bank, in direkter zeitlicher Abfolge durchgeführt werden. Dabei ist in der Regel ein konventionelles Identifikationsverfahren in Verwendung, wie die Legitimation anhand eines Ausweises - entweder Face-to-Face am Schalter durch eine geschulte Person, oder ersatzweise im Rahmen einer Online-Video-Session mit einem entsprechend geschultem Call-Agent (Person), oder es werden verschiedene andere Identifikationselemente in Summe zu einem der Qualität des gewünschten Zertifikats entsprechenden Maß zusammengeführt, wie etwa eine Referenzüberweisung mit Bankdaten in Verbindung mit App-basierten automatischen Ausweisprüfungen oder dergleichen.

Es wird in weiterer Folge ein Zertifikat erstellt, für das wiederum Authentifikationsmechanismen (zum Beispiel Authentifikation per SMS) festgelegt werden. Direkt darauf folgt in einem solchen optimierten Ablauf bereits Schritt 2, wo dann, unter Anwendung der festgelegten Authentifikationsmechanismen, im Verfahren gegenständliche Dokumente/Daten elektronisch unterzeichnet werden. Obwohl beide Schritte hierbei eng hintereinander erfolgen, und beide Schritte daher als derselbe Vorgang wahrgenommen werden könnten, ist es ein 2-stufiges Verfahren. Auch erfolgt bei diesen Verfahren eine Identifikation generell durch Ausweislegung und/oder durch Bestandsdaten oder Referenzdaten (z.B. Banküberweisung) gepaart mit einer automatischen Erkennung von Ausweisen (z.B. über Apps). Diese bekannten 2-stufigen Verfahren zur Erstellung elektronischer Signaturen sind jedoch zeitaufwändig und ineffizient. Die Aufgabe der Erfindung besteht somit darin, ein verbessertes Verfahren zur Erstellung einer elektronischen Signatur bereitzustellen.

Diese und andere Aufgaben werden erfindungsgemäß durch ein Verfahren und eine Vorrichtung gemäß den unabhängigen Patentansprüchen gelöst.

Der Erfindung liegt die Erkenntnis zugrunde, dass viele Personen bereits über ein starkes, sicheres und rechtsverbindliches elektronisches Identifikationsmittel verfügen (electronic Identity (eID), wie etwa eine nationale elektronische Identitätskarte, eine mobile nationale eID, ein bestehendes Zertifikat eines Trust-Centers, oder dergleichen). Solche elektronischen Identifikationsmittel sind ungeachtet davon, ob sie von nationalen Behörden oder privaten Stellen wie Trust-Center, Banken oder Versicherungen ausgegeben werden, meist tauglich, um deren Inhaber sicher, eindeutig und rechtsverbindlich zu identifizieren und bieten starke Authentifikationsmechanismen (Mehrfaktorauthentifikation durch z.B. Username/Passwort und einen SMS-Code, eine App oder ein kryptographisches Schlüsselelement).

Meist kann damit jedoch direkt keine elektronische Signatur geleistet werden, oder aber die Möglichkeiten der mit dem bestehenden elektronischen Identifikationsmittel verbundenen elektronischen Signaturfunktion sind sehr eingeschränkt.
Beispielsweise ist die Signaturqualität solcher Identifikationsmittel für viele Anwendungen nicht ausreichend oder die Signaturfunktionen des elektronischen Identifikationsmittels verfügen über technische Einschränkungen, die deren Nutzung in Standardanwendungen unmöglich machen.

Im erfindungsgemäßen Verfahren wird demnach ein bestehendes elektronisches Identifikationsmittel dazu genutzt, um eine elektronische Signatur zu erstellen, sofern das elektronische Identifikationsmittel den rechtlichen und technischen Anforderungen für die gewünschte elektronische Signaturqualität gerecht wird, und zwar sowohl zur Identifikation des Benutzers im Zuge der Zertifikatsausstellung gemäß Schritt 1, als auch zur Erstellung der elektronischen Signatur gemäß Schritt 2.

Mit dem erfindungsgemäßen Verfahren wird mit einem bestehenden elektronischen Identifikationsmittel eine elektronische Signatur erstellt, indem das Durchführen einer elektronischen Signatur für den Inhaber eines elektronischen Identifikationsmittels wie die Nutzung ihres oder seines elektronisches Identifikationsmittels wahrgenommen wird, etwa vergleichbar mit dem Login bei einem Portal. Dies impliziert, dass für die so erstellte Signatur ein neues und nur für diese Signatur nutzbares elektronisches Signaturzertifikat, das sogenannte Transaktionszertifikat, auf Basis der Daten des vorhandenen elektronischen Identifikationsmittels erstellt und sofort zur Signatur und nur einmalig (nur in dieser einen Transaktion) angewendet wird.

Das erfindungsgemäße Verfahren zeichnet sich demnach dadurch aus, dass es auf Basis eines bestehenden elektronischen Identifikationsmittels beide Schritte (Schritt (1) Ausstellung des Zertifikates und Schritt (2) die Erstellung einer Signatur) nahtlos und unmittelbar hintereinander durchführt und miteinander zu einem Vorgang verbindet. Ein bestehendes elektronisches Identifikationsmittel wird somit für die Ausstellung des Zertifikats und der dabei notwendigen Identifikation und Authentifikation des Benutzers herangezogen, und unmittelbar darauf verwendet, um die elektronische Signatur zu autorisieren und somit zu erstellen.

Ein erfindungsgemäßes Verfahren zur Signierung zumindest eines elektronischen Dokuments eines Benutzers durch Anwendung einer elektronischen Signatur im Rahmen einer Signaturtransaktion umfasst die folgenden Schritte:
Entgegennahme, von einem Endgerät, des elektronischen Dokuments durch eine Signaturanwendung, Signierung des Dokuments durch ein mit der Signaturanwendung in Verbindung stehendes Signatursystem, unter Verwendung eines elektronischen Signaturzertifikats, und Übermittlung durch die Signaturanwendung, des signierten Dokuments an ein Endgerät.

Erfindungsgemäß ist vorgesehen, dass das Signatursystem den Benutzer identifiziert, authentifiziert und die Auslösung der Signaturtransaktion autorisiert, wobei die Schritte der Identifikation, Authentifikation und Autorisierung durch Abfrage eines bestehenden elektronischen Identifikationsmittel des Benutzers vorgenommen werden, wobei das Identifikationsmittel zumindest Identitätsdaten und Authentifikationsmechanismen des Benutzers enthält. Als Identitätsdaten werden dabei beispielsweise Name, Geburtsdatum, Sozialversicherungsnummer, E-Mail-Adresse des Benutzers oder dergleichen verstanden. Als Authentifikationsmechanismen werden beispielsweise hinterlegte Routinen zur Mehr-Faktor-Autorisierung verstanden, beispielsweise über Passwort und eine SMS-Nachricht.

Erfindungsgemäß erhält das Signatursystem die Identitätsdaten von dem elektronischen Identifikationsmittel und erstellt das zur Signierung eingesetzte elektronische Signaturzertifikat der Signaturtransaktion als Transaktionszertifikat neu, wobei es die Identitätsdaten und Authentifikationsmechanismen des Benutzers zur Ausstellung des Transaktionszertifikates heranzieht.

Erfindungsgemäß kann es sich bei dem elektronischen Identifikationsmittel um ein bestehendes elektronisches Signaturzertifikat des Benutzers handeln, beispielsweise um ein elektronisches Signaturzertifikat gemäß eIDAS-Verordnung oder um ein (nationales oder privatwirtschaftliches) elektronisches Identitätsmittel, wie beispielsweise der Handysignatur (eID) in Österreich oder einem anderen adäquaten elektronische Identitätsmittel.

Erfindungsgemäß kann vorgesehen sein, dass das Signatursystem eine eindeutige Transaktionskennung erstellt und diese dem neuen elektronischen Signaturzertifikat hinzufügt, sodass eine eindeutige Zuordnung des Signaturzertifikats an die Signaturtransaktion ermöglicht wird.

Erfindungsgemäß kann vorgesehen sein, dass die Transaktionskennung dem Signaturzertifikat in lesbarer Form hinzugefügt wird.

Erfindungsgemäß kann vorgesehen sein, dass das Signaturzertifikat nicht die Identitätsdaten des Benutzers, sondern einer ihm zugeordneten Organisation enthält.

Erfindungsgemäß kann vorgesehen sein, dass es sich bei der erstellten elektronischen Signatur um eine qualifizierte elektronische Signatur und bei dem erstellten Transaktionszertifikat um ein qualifiziertes elektronisches Zertifikat gemäß der eIDAS-Verordnung EU 910/2014 handelt.

Erfindungsgemäß kann vorgesehen sein, dass es sich bei der erstellten elektronischen Signatur um ein qualifiziertes elektronisches Siegel und bei dem erstellten Transaktionszertifikat um ein qualifiziertes elektronisches Siegel-Zertifikat gemäß der eIDAS-Verordnung EU 910/2014 handelt.

Erfindungsgemäß kann vorgesehen sein, dass im Rahmen der Signaturtransaktion mehrere Dokumente oder Datensätze signiert werden, wobei jedes Dokument oder Datensatz unter Verwendung desselben erstellten elektronischen Signaturzertifikats einzeln signiert wird.

Erfindungsgemäß kann vorgesehen sein, dass statt des vollständigen zu signierenden Dokuments nur ein abgeleiteter Wert, beispielsweise ein Hash-Wert des Dokuments, an das Signatursystem übermittelt wird.

Erfindungsgemäß kann vorgesehen sein, dass das Signatursystem ein Fernsignatursystem eines qualifizierten Vertrauensdiensteanbieters (VDA) ist.

Die Erfindung betrifft ferner ein computerlesbares Speichermedium, umfassend Anweisungen, welche eine Datenverarbeitungseinheit, insbesondere eine auf einer Datenverarbeitungseinheit laufende Signaturanwendung und/oder ein Signatursystem, zur Ausführung eines erfindungsgemäßen Verfahrens veranlasst.

Die Erfindung betrifft ferner eine Vorrichtung zur Signierung zumindest eines elektronischen Dokuments eines Benutzers durch Anwendung einer elektronischen Signatur im Rahmen einer Signaturtransaktion. Eine derartige Vorrichtung umfasst eine Signaturanwendung, die dazu ausgebildet ist, das elektronische Dokument von einem Endgerät entgegenzunehmen, sowie ein mit der Signaturanwendung in Verbindung stehendes Signatursystem, das dazu ausgebildet ist, das Dokument, oder eine kryptographische Ableitung (Hash-Wert) davon, unter Verwendung eines elektronischen Signaturzertifikats elektronisch zu signieren, wobei die Signaturanwendung dazu ausgebildet ist, das signierte Dokument nach Abschluss der Signaturtransaktion an ein Endgerät zurückzusenden.

Erfindungsgemäß ist ein dem Benutzer zugeordnetes elektronisches Identifikationsmittel vorgesehen, welches zumindest Identitätsdaten und Authentifikationsmechanismen des Benutzers enthält.

Erfindungsgemäß ist das Signatursystem dazu ausgebildet, durch Abfrage des bestehenden Identifikationsmittels den Benutzer zu identifizieren, authentifizieren und damit die Auslösung der Signaturtransaktion zu autorisieren.

Erfindungsgemäß ist das Signatursystem dazu ausgebildet, die Identitätsdaten und Authentifikationsmechanismen vom elektronischen Identifikationsmittel entgegenzunehmen, das zur Signierung eingesetzte elektronische Signaturzertifikat als Transaktionszertifikat neu zu erstellen, und die Identitätsdaten und Authentifikationsmechanismen des Benutzers zur Ausstellung des Signaturzertifikats heranzuziehen.

Erfindungsgemäß kann vorgesehen sein, dass das Signatursystem dazu ausgebildet ist, eine eindeutige Transaktionskennung zu erstellen und diese dem elektronischen Signaturzertifikat, vorzugsweise in lesbarer Form, hinzuzufügen.
Erfindungsgemäß kann vorgesehen sein, dass das Signatursystem ein Fernsignatursystem eines qualifizierten Vertrauensdiensteanbieters (VDA) ist.

Erfindungsgemäß kann vorgesehen sein, dass es sich bei einem Endgerät um einen PC, insbesondere einen Server, oder um ein mobiles Endgerät (zum Beispiel Smartphone oder Tablet) handelt. Das Endgerät kann einem Benutzer zugeordnet sein.

Erfindungsgemäß kann vorgesehen sein, dass ein erster Server-PC oder Server-PC-System vorgesehen ist, auf dem die Signaturanwendung läuft und das vorzugsweise über das Internet mit dem Endgerät verbunden ist.

Erfindungsgemäß kann vorgesehen sein, dass ein zweiter Server-PC oder Server-PC-System vorgesehen ist, auf dem das Signatursystem läuft, wobei sich der zweite Server-PC oder Server-PC-System in einer Hochsicherheitsumgebung befindet und vorzugsweise über eine gesicherte Datenverbindung mit der Signaturanwendung und dem Kernsystem verbunden ist.

Erfindungsgemäß kann vorgesehen sein, dass ein dritter Server-PC oder drittes Server-PC-System vorgesehen ist, auf dem weitere Kernsysteme zur Erzeugung, Speicherung und Verwaltung elektronischer Zertifikate sowie öffentlicher Schlüssel laufen, und das sich in einer Hochsicherheitsumgebung befindet und vorzugsweise über eine gesicherte Datenverbindung mit der Signaturanwendung und dem Signatursystem verbunden ist.

Weitere Merkmale der Erfindung ergeben sich aus den Patentansprüchen, der Beschreibung der Ausführungsbeispiele und den Figuren.

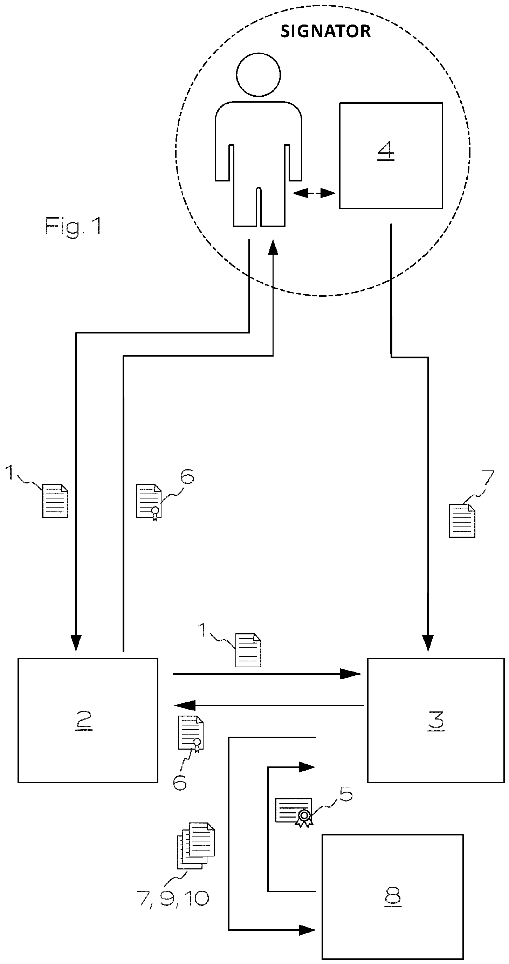

Die Erfindung wird im Folgenden anhand eines Ausführungsbeispiels gemäß Fig. 1 näher erläutert.

**Fig. 1** zeigt eine schematische Darstellung einer Ausführungsform eines erfindungsgemäßen Verfahrens.

Im Mittelpunkt steht der Benutzer (Signator), der über ein vom Verfahren akzeptiertes elektronisches Identifikationsmittel 4 verfügt, zum Beispiel die österreichische Handysignatur oder eID. Der Benutzer möchte damit eine elektronische Signatur leisten, wobei die Qualität der zu erzeugenden elektronischen Signatur für die weitere Betrachtung des Verfahrens nicht relevant ist. Entscheidend ist, dass die Qualität des elektronischen Identifikationsmittels 4 für die Erstellung der zu erzeugenden elektronischen Signatur ausreichend ist, sowohl in Bezug auf die Qualität der Identitätsdaten 7 als auch auf die Stärke der damit getätigten Authentifikation.

Als Beispiel kann eine zu erstellende qualifizierte Signatur gemäß eIDAS-Verordnung herangezogen werden. Das einer qualifizierten Signatur zu Grunde liegende qualifizierte Signaturzertifikat erfordert beispielsweise eine Identifikation auf Basis eines nationalen Lichtbildausweises wie Reisepass und eine starke MehrfaktorAuthentifikation dessen Inhabers. Diese Qualitätsanforderungen werden durch viele nationale elektronische Identifikationsmittel, wie der Handy-Signatur in Österreich oder dem neuen Personalausweis (nPA) in Deutschland, gewährleistet.

Die vom Benutzer elektronisch zu signierenden Daten bzw. Dokumente 1 werden einer Signaturanwendung 2 übergeben, die beispielsweise auf einem entfernten Server im Internet bereitgestellt ist. Die Signaturanwendung 2 bereitet die Daten bzw. Dokumente auf und bereitet die zu erstellende Signatur vor, u.a. durch Platzieren von Signaturbildern.

Zur Erstellung der Signatur wird ein neues, für diese Signaturtransaktion einzigartiges Signaturzertifikat, das sogenannte Transaktionszertifikat 5, erzeugt. Die Signaturtransaktion kann dabei sowohl die Signatur eines einzelnen Dokumentes umfassen, sowie können mit einer Transaktion auch mehrere Dokumente auf einmal signiert werden, wobei jedes Dokument im Zuge der Signaturtransaktion mit einer einzelnen, kryptografischen Signatur versehen wird.

Zur Erstellung einer Signatur, d.h. beim Auslösen einer Signaturtransaktion, wird der Benutzer anhand seines bestehenden elektronischen Identifikationsmittels 4 (zum Beispiel seiner nationalen eID oder eines bestehenden Zertifikats eines anderen Herausgebers) gegenüber dem Signatursystem 3 identifiziert.

Dabei wird nicht nur die Identität des Benutzers sichergestellt, sondern die Authentifikation wirkt auch als Freigabe für die Signaturtransaktion (Autorisierung). Diese enge Koppelung an die Nutzung des elektronischen Identifikationsmittels ist ein wesentliches Merkmal des Verfahrens, da so keinerlei weiteren Authentifikationsmechanismen vom Benutzer abgefragt werden müssen. Der Benutzer identifiziert sich gegenüber dem Fernsignatursystem 3 beim Auslösen des Signaturvorganges durch Benutzung seines elektronischen Identifikationsmittels 4, und die aus dem Identifikationsmittel 4 gewonnenen Identitätsdaten 7 werden auch zur Erstellung des Zertifikates verwendet.

Serverseitig werden folgende interne Abläufe initiiert:
Die zu signierenden elektronischen Dokumente 1, oder zumindest ein für diese Daten/Dokumente repräsentativer Hash-Wert, der auch zur Erstellung der kryptografischen Signatur herangezogen wird und die Signaturdaten repräsentiert, werden von der Signaturanwendung 2 an ein Fernsignatursystem 3 des Vertrauensdienstanbieters übermittelt.

Die Signaturtransaktion kann ein elektronisches Dokument/Daten oder mehrere elektronische Dokumente/Datensätze umfassen. Jedoch ist nach Übergabe der Dokumente der Umfang der Signaturtransaktion festgelegt, sowohl in Bezug auf die zu signierenden Daten als auch aus zeitlicher Sicht. Es können keine Daten/Dokumente hinzugefügt werden oder später weitere Signaturen mit dieser Signaturtransaktion erzeugt werden.

In weiterer Folge wird im Fernsignatursystem 3 die Signaturtransaktion angelegt und ein neues Signaturschlüsselpaar bestehend aus privatem Signaturschlüssel und öffentlichem Signaturschlüssel 9 erzeugt.

Diese sind nur für die gegenständliche Signaturtransaktion gültig. Ferner wird eine eindeutige Transaktionskennung zur Kennzeichnung der Signaturtransaktion erzeugt.

Die vom elektronischen Identifikationsmittel 4 im Zuge des Auslösens der Signatur bereitgestellten Identitätsdaten 7 (z.B. Vorname, Nachname, ID-Nummer, etc.) werden verifiziert (Verifikation u.a. auf formale Richtigkeit, Qualität, Herausgeber der Daten/eID, Authentizität der Daten/eID, etc.). Im Sinne der Anforderung der zu erstellenden Signaturqualität stellt die Verifikation auch die ausreichende Stärke des Authentifikationsmechanismus des verwendeten Identifikationsmittels 4 sicher.

Das Fernsignatursystem 3 des Vertrauensdiensteanbieters (VDA) greift zur Erzeugung des Signaturzertifikats auf weitere Kernsysteme 8 zu, die gegebenenfalls in eigenen gesicherten Servern vorgesehen sind. Diese umfassen unter anderem die Registration Authority (RA), die Certification Authority (CA) sowie die Public Key Infrastructure (PKI) des Vertrauensdienstanbieters.

Unter Verwendung der geprüften Identitätsdaten 7, dem unmittelbar zuvor generierten öffentlichen Schlüssel 9, sowie der Transaktionskennung 10 wird über das Fernsignatursystem 3 in den Kernsystemen 8 ein Signaturzertifikat erstellt (Transaktionszertifikat 5). Die Transaktionskennung 10 wird ins Transaktionszertifikat 5 aufgenommen und das Transaktionszertifikat 5 wird an das Fernsignatursystem 3 übermittelt.

Danach wird die Signaturerstellung abgeschlossen, indem der Hash-Wert des übermittelten Dokuments im Fernsignatursystem mit dem privaten Schlüssel des Benutzers verschlüsselt wird (Signaturerstellung). Es ist dabei keine weitere Autorisierung durch den Benutzer erforderlich, da diese bereits mit der Authentifikation durch sein elektronisches Identifikationsmittel gegenüber dem Fernsignatursystem gegeben ist. Eine neuerliche Prüfansicht der zu signierenden elektronischen Dokumente ist aus Sicht der Benutzerführung und Transparenz sinnvoll und möglich, für das gegenständliche Verfahren jedoch nicht erforderlich. Die elektronische Signatur wird an die Signaturanwendung übertragen. Die Signaturanwendung 2 stellt das signierte Dokument 6 fertig.

Es entfällt in jedem Fall eine neuerliche Authentifikation zur Auslösung der Signatur, wie etwa durch Eingabe eines weiteren Authentifikationsmerkmals. Im Zuge der Signaturerstellung werden alle zu signierenden Dokumente signiert. Nach Abschluss der Signaturtransaktion wird der private Schlüssel im Fernsignatursystem verworfen und gelöscht. Somit ist mit dem erzeugten privaten Schlüssel keine weitere Signatur und auch kein Missbrauch möglich.

Erfindungsgemäß kann vorgesehen sein, dass das Transaktionszertifikat eindeutig ist und nur im Rahmen der aktuellen Signaturtransaktion benutzt werden kann. Dies kann beispielsweise dadurch erreicht werden, dass das Transaktionszertifikat eine sehr kurze Gültigkeitsdauer von wenigen Minuten oder Sekunden hat.

Die im Zuge der Signaturtransaktion signierten Daten bzw. elektronischen Dokumente werden abschließend von der Signaturanwendung dem Benutzer bereitgestellt.

Die Erfindung umfasst sämtliche Verfahren und Vorrichtungen im Rahmen der nachfolgenden Patentansprüche. Die vorliegende Offenbarung nimmt zwar Bezug auf qualifizierte Signaturen und Zertifikate, die Erfindung ist jedoch nicht darauf beschränkt.

### Bezugszeichenliste

- 1: Elektronisches Dokument
- 2: Signaturanwendung
- 3: Signatursystem
- 4: Elektronisches Identifikationsmittel
- 5: Transaktionszertifikat
- 6: Signiertes elektronisches Dokument
- 7: Identitätsdaten
- 8: VDA Kernsysteme
- 9: Öffentlicher Signaturschlüssel
- 10: Transaktionskennung

## Patentansprüche

1. Verfahren zur Signierung zumindest eines elektronischen Dokuments (1) eines Benutzers durch Anwendung einer elektronischen Signatur im Rahmen einer Signaturtransaktion, wobei das Verfahren die folgenden Schritte umfasst:
a. Entgegennahme, von einem Endgerät, des elektronischen Dokuments (1) an einer Signaturanwendung (2),
b. Signierung, durch ein mit der Signaturanwendung (2) in Verbindung stehendes Signatursystem (3), des Dokuments (1) unter Verwendung eines elektronischen Signaturzertifikats,
c. Übermittlung, durch die Signaturanwendung (2), des signierten Dokuments (6) an ein Endgerät,
**dadurch gekennzeichnet, dass**
d. das Signatursystem (3) den Benutzer identifiziert, authentifiziert und die Auslösung der Signaturtransaktion autorisiert, wobei die Schritte der Identifikation, Authentifikation und Autorisierung durch Abfrage eines bestehenden elektronischen Identifikationsmittels (4) des Benutzers vorgenommen werden, wobei das Identifikationsmittel (4) zumindest Identitätsdaten (7) und Authentifikationsmechanismen des Benutzers enthält, und wobei
e. das Signatursystem (3)
i. die Identitätsdaten (7) von dem elektronischen Identifikationsmittel (4) erhält, und
ii. das zur Signierung eingesetzte elektronische Signaturzertifikat im Schritt b) der Signaturtransaktion als Transaktionszertifikat (5) neu erstellt, und
iii. die Identitätsdaten (7) und Authentifikationsmechanismen des Benutzers zur Ausstellung des Transaktionszertifikates (5) und Autorisierung der Signaturerstellung heranzieht.

2. Verfahren nach Anspruch 1, **dadurch gekennzeichnet, dass** es sich bei dem elektronischen Identifikationsmittel (4) um ein **bestehendes elektronisches Signaturzertifikat** des Benutzers handelt, beispielsweise um ein elektronisches Signaturzertifikat gemäß eIDAS-Verordnung oder um ein Zertifikat als Teil eines nationalen Identitätsmittels, wie beispielsweise der Handysignatur.

3. Verfahren nach Anspruch 1 oder 2, **dadurch gekennzeichnet, dass** das Signatursystem (3) eine eindeutige Transaktionskennung (10) erstellt und diese dem elektronischen Signaturzertifikat hinzufügt, sodass eine eindeutige Zuordnung des Signaturzertifikats an die Signaturtransaktion ermöglicht wird.

4. Verfahren nach Anspruch 3, **dadurch gekennzeichnet, dass** die Transaktionskennung (10) dem Signaturzertifikat **in lesbarer Form** hinzugefügt wird.

5. Verfahren nach einem der Ansprüche 1 bis 4, **dadurch gekennzeichnet, dass** das Signaturzertifikat nicht die Identitätsdaten des Benutzers, sondern einer ihm zugeordneten **Organisation** enthält.

6. Verfahren nach einem der Ansprüche 1 bis 5, **dadurch gekennzeichnet, dass** es sich bei der erstellten elektronischen Signatur um eine **qualifizierte** elektronische Signatur und bei dem erstellten Transaktionszertifikat (5) um ein **qualifiziertes** elektronisches Zertifikat gemäß der eIDAS-Verordnung EU 910/2014 handelt.

7. Verfahren nach einem der Ansprüche 1 bis 6, **dadurch gekennzeichnet, dass** es sich bei der erstellten elektronischen Signatur um ein **qualifiziertes** elektronisches **Siegel** und bei dem erstellten Transaktionszertifikat (5) um ein **qualifiziertes** elektronisches **Siegel**-Zertifikat gemäß der eIDAS-Verordnung EU 910/2014 handelt.

8. Verfahren nach einem der Ansprüche 1 bis 7, **dadurch gekennzeichnet, dass** im Rahmen der Signaturtransaktion **mehrere Dokumente (1) oder Datensätze** signiert werden, wobei jedes Dokument (1) oder Datensatz unter Verwendung desselben erstellten elektronischen Signaturzertifikats einzeln signiert wird.

9. Verfahren nach einem der Ansprüche 1 bis 8, **dadurch gekennzeichnet, dass** statt des vollständigen zu signierenden Dokuments (1) nur ein abgeleiteter Wert, beispielsweise ein Hash-Wert des Dokuments, an das Signatursystem (3) übermittelt wird.

10. Verfahren nach einem der Ansprüche 1 bis 9, **dadurch gekennzeichnet, dass** das Signatursystem (3) ein Fernsignatursystem eines Vertrauensdiensteanbieters (VDA) ist.

11. **Computerlesbares Speichermedium,** umfassend Anweisungen, welche eine Datenverarbeitungseinheit, insbesondere eine auf einer Datenverarbeitungseinheit laufende Signaturanwendung und/oder ein Signatursystem, zur Ausführung eines Verfahrens nach einem der Ansprüche 1 bis 10 veranlasst.

12. **Vorrichtung** zur Signierung zumindest eines elektronischen Dokuments (1) eines Benutzers durch Anwendung einer elektronischen Signatur im Rahmen einer Signaturtransaktion, umfassend
a. eine Signaturanwendung (2), die dazu ausgebildet ist, **das elektronische Dokument (1) von einem** Endgerät entgegenzunehmen, sowie
b. ein mit der Signaturanwendung (2) in Verbindung stehendes Signatursystem (3), das dazu ausgebildet ist, das Dokument (1) unter Verwendung eines elektronischen Signaturzertifikats elektronisch zu signieren, wobei
c. die Signaturanwendung (2) dazu ausgebildet ist, das signierte Dokument (6) nach Abschluss der Signaturtransaktion an ein Endgerät zurückzusenden,
**dadurch gekennzeichnet, dass**
d. ein dem Benutzer zugeordnetes **elektronisches Identifikationsmittel (4)** vorgesehen ist, welches zumindest Identitätsdaten (7) und Authentifikationsmechanismen des Benutzers enthält, und wobei das Signatursystem (3) dazu ausgebildet ist, **durch Abfrage des bestehenden Identifikationsmittels** (4) den Benutzer zu identifizieren, **authentifizieren** und damit die Auslösung der Signaturtransaktion zu **autorisieren,** wobei
e. das Signatursystem (3) dazu ausgebildet ist,
i. die Identitätsdaten (7) vom elektronischen Identifikationsmittel (4) **entgegenzunehmen,** und
ii. das zur Signierung eingesetzte elektronische Signaturzertifikat **als Transaktionszertifikat (5) neu zu erstellen,** und
iii. die Identitätsdaten (7) und Authentifikationsmechanismen des Benutzers zur Ausstellung des Signaturzertifikats heranzuziehen.

13. Vorrichtung nach Anspruch 12, **dadurch gekennzeichnet, dass** das Signatursystem (3) dazu ausgebildet ist, eine eindeutige Transaktionskennung (10) zu erstellen und diese dem elektronischen Signaturzertifikat, vorzugsweise in lesbarer Form, hinzuzufügen.

14. Vorrichtung nach einem der Ansprüche 12 oder 13, **dadurch gekennzeichnet, dass** das Signatursystem (3) ein Fernsignatursystem eines Vertrauensdiensteanbieters (VDA) ist.

15. Vorrichtung nach einem der Ansprüche 12 bis 14, **dadurch gekennzeichnet, dass** es sich bei dem **Endgerät** um einen PC, insbesondere einen Server, oder um ein mobiles Endgerät (zum Beispiel Smartphone oder Tablet) handelt.

16. Vorrichtung nach einem der Ansprüche 12 bis 15, **dadurch gekennzeichnet, dass** ein **erster Server-PC oder Server-PC-System** vorgesehen ist, auf dem die Signaturanwendung (2) läuft und das vorzugsweise über das Internet mit dem Endgerät verbunden ist.

17. Vorrichtung nach einem der Ansprüche 12 bis 16, **dadurch gekennzeichnet, dass** ein zweiter Server-PC oder **Server-PC-System** vorgesehen ist, auf dem das Signatursystem (3) läuft, wobei sich der zweite Server-PC oder **Server-PC-System** in einer Hochsicherheitsumgebung befindet und vorzugsweise über eine gesicherte Datenverbindung mit der Signaturanwendung (2) und dem Kernsystem verbunden ist.

18. Vorrichtung nach einem der Ansprüche 12 bis 17, **dadurch gekennzeichnet, dass** ein dritter Server-PC oder **drittes Server-PC-System** vorgesehen ist, auf dem weitere Kernsysteme zur Erzeugung, Speicherung und Verwaltung elektronischer Zertifikate sowie öffentlicher Schlüssel (9) laufen, und das sich in einer Hochsicherheitsumgebung befindet und vorzugsweise über eine gesicherte Datenverbindung mit der Signaturanwendung und dem Signatursystem verbunden ist.
